# EUROPÄISCHE PATENTANMELDUNG

(11) **EP 0 739 020 A2**
(43) Veröffentlichungstag der Anmeldung: **23.10.1996**
(21) Anmeldenummer: 96104470.8
(22) Anmeldetag: 21.03.1996
(51) Int. Cl.: H01G 9/20

(54) **Photochemische Zelle**

(30) Priorität: 15.04.1995 DE 19514156
(71) Anmelder: Heidelberger Druckmaschinen Aktiengesellschaft, D-69115 Heidelberg (DE)
(72) Erfinder: Hoffmann, Horst, Dr.-Ing., 42555 Velbert (DE); Rodi, Anton, 69181 Leimen (DE)
(74) Vertreter: Stoltenberg, Heinz-Herbert Baldo

(57) **Zusammenfassung**

Die Erfindung betrifft ein Verfahren zur Herstellung einer photochemischen Zelle, insbesondere Farbstoffsolarzelle (Dye Solar Cell), die mindestens ein Trägersubstrat und auf diesem mehrere Schichten aufweist. Es ist vorgesehen, daß die Schichten (7, 8, 9, 10, 11; 8, 9, 10) mittels mehrerer, nacheinander erfolgender Druckvorgänge aufgebracht werden. Die Erfindung betrifft ferner eine derartig hergestellte photochemische Zelle sowie ein Verfahren zur Verwendung einer Druckmaschine zur Erstellung einer derartigen Zelle und auch eine Druckmaschine zur Herstellung der photochemischen Zelle.

## Beschreibung

Die Erfindung betrifft ein Verfahren zur Herstellung einer photochemischen Zelle, insbesondere Farbstoffsolarzelle (Dye Solar Cell), die mindestens ein Trägersubstrat und auf diesem mehrere Schichten aufweist.

Bisher erforderte die Herstellung einer derartigen photochemischen Zelle aufwendige Spezialeinrichtungen, wobei eine Vielzahl von Schritten per Hand durchgeführt wurde. Diese individuelle, im Labor durchgeführte Herstellung bringt hohe Stückkosten mit sich und ist überdies nicht reproduzierbar.

Der Erfindung liegt daher die Aufgabe zugrunde, ein Verfahren zur preiswerten und reproduzierbaren Herstellung von photochemischen Zellen anzugeben. Insbesondere soll mit dem Verfahren die an der École Politechnique Féderale in Lausanne von Herrn Prof. Michael Grätzel entwickelte Farbstoffsolarzelle hergestellt werden. In diesem Zusammenhang wird auf die internationale Patentanmeldung WO 91/16719 verwiesen.

Diese Aufgabe wird erfindungsgemaß dadurch gelöst, daß die Schichten mittels mehrerer, nacheinander erfolgender Druckvorgänge aufgebracht werden. Durch den Einsatz der Drucktechnik zum übereinander erfolgenden Auftragen der einzelnen Schichten wird einerseits eine sehr enge Fertigungstoleranz und andererseits eine extrem kostengünstige Herstellung erzielt, die eine Massenproduktion mit sehr kurzen Fertigungszeiten zulaßt. Die Erstellung einer Farbstoffsolarzelle ist insbesondere in einem Produktionsfluß komplett möglich, wobei sich die notwendig sehr geringen Schichtdicken mit hoher Präzision realisieren lassen, insbesondere dann, wenn die Herstellung mittels einer Rotationsdruckmaschine erfolgt, können sehr großflächige Schichten, insbesondere auch kontinuierlich, aufgebracht werden, d. h., es ist theoretisch keine Flächenbegrenzung vorgegeben. Erfindungsgemäß wird somit zur Herstellung der photochemischen Zelle eine Druckmaschine zum Aufbringen von freien Strukturen eingesetzt. Dabei ist es möglich, auf die Schichten nur äußerst geringe Zug- und Preßkräfte einwirken zu lassen, so daß die Erzeugung homogen und ohne Rißbeschädigung oder dergleichen erfolgt.

Nach einer Weiterbildung der Erfindung ist vorgesehen, daß die Druckvorgänge unter Ausbildung jeweils einer vollflächigen, zusammenhängenden, nach Art eines Offsetdrucks erstellten Schicht durchgeführt werden. Nach "Art eines Offsetdrucks" bedeutet hinsichtlich des "zusammenhängenden" Auftrags, daß nicht - wie beispielsweise beim Druck von Bildern - Farbpunkte erstellt werden, sondern daß eine vollflächige Beschichtung durchgeführt wird. Gleichwohl sind alle beziehungsweise die meisten aus dem Offsetdruck bekannten Mittel und Einrichtungen auch zur Erstellung der photochemischen Zelle einsetzbar.

Insbesondere ist vorgesehen, daß jede Schicht mittels eines eigenen Druckwerks einer Druckmaschine aufgebracht wird. Hierzu wird jedem Druckwerk das entsprechende Material, das von Schicht zu Schicht unterschiedlich sein kann, zugeführt. Vorzugsweise ist dieses Material als zähflüssiges Medium ausgebildet.

Um das Gesamtsubstrat in einzelne elektrische Zellen zu separieren ist insbesondere vorgesehen, daß zumindest einige der Schichten mittels Isolationsstegen in Abschnitte unterteilt werden. Jeder Abschnitt bildet eine Einzelzelle, die beispielsweise eine Spannung von 1 Volt zur Verfügung stellt.

Diese Isolationsstege werden vorzugsweise ebenfalls mittels eines Druckvorgangs erstellt. Sofern zum Aufbau eines mehrere Schichten überbrückenden Isolationsstegs eine entsprechende Steglänge ausgebildet werden muß, werden vorzugsweise mehrere Isolationssteg-Schichten aufgebracht, wobei die Anzahl der Druckvorgänge zum schrittweisen Aufbau des Isolationsstegs führt.

Besonders bevorzugt ist, wenn das Trägersubstrat beim Druckvorgang entlang einer Ebene geführt wird oder sich auf einer Ebene abstützt. Das führen in einer Ebene ist dann erforderlich, wenn die Druckeinrichtung ortsfest ausgebildet und das Trägersubstrat bewegt wird. Sofern das Trägersubstrat beim Druckvorgang eine ortsfeste Position einnimmt, ist es erforderlich, daß sich das Druckwerk entsprechend bewegt. Selbstverständlich ist auch eine Relativbewegung derart möglich, daß beide Teile eine Bewegung durchführen. Unabhängig von den genannten Varianten ist jedoch stets darauf zu achten, daß das Trägersubstrat nicht unzulässig stark durchbiegt, da sonst bei dem Druckprozeß Beschädigungen der Schichten zu befürchten sind, die einer einwandfreien Funktion der Farbstoffsolarzelle entgegenstehen könnten. Mithin erfolgt eine Abkehr von der üblichen Konstruktion von Druckmaschinen derart, daß der Bedruckstoff nicht kurvenförmig durch die Druckmaschine transportiert, sondern beim Druckvorgang plangelagert oder geführt wird.

Nach einer Weiterbildung der Erfindung ist vorgesehen, daß der elektrischen Stromleitung dienende Leitschichten aufgedruckt werden. Diese Leitschichten dienen dazu, die Ladungsträger beim Betrieb der Farbstoffsolarzelle zu sammeln und abzuführen. Diese Leitschichten können auch zum Verschalten einzelner Zellen eines Gesamtsubstrats verwendet werden, um beispielsweise eine Reihenschaltung der Einzelzellen zu schaffen. Hierbei ist es - je nach Konstruktion - möglich, daß zwischen Isolationsstegen verlaufende Leitstege ausgebildet werden müssen. Dies kann ebenfalls mittels eines oder mehrerer Druckvorgänge erfolgen, wobei bei entsprechend großen Leitsteglänge mehrere Leitschichtabschnitte übereinander gedruckt werden, wodurch der gewünschte Leitsteg gebildet wird.

Die Erfindung betrifft ferner eine photochemische Zelle, insbesondere Farbstoffsolarzelle (Dye Solar Cell) die mindestens ein Trägersubstrat und auf diesem mehrere Schichten aufweist, wobei die Schichten mittels mehrerer, nacheinander durchgeführter Druckvorgänge aufeinanderliegend erzeugt sind.

Ferner betrifft die Erfindung ein Verfahren zur Verwendung einer Druckmaschine, insbesondere Offsetdruckmaschine, mit mehreren Druckwerken zur Erstellung einer photochemischen Zelle, insbesondere Farbstoffsolarzelle (Dye Solar Cell).

Schließlich betrifft die Erfindung eine Druckmaschine, insbesondere Offsetdruckmaschine, zur Herstellung einer photochemischen Zelle, insbesondere Farbstoffsolarzelle (Dye Solar Cell), die mindestens ein Trägersubstrat und auf diesem mehrere Schichten aufweist, wobei mehrere Druckwerke zum Aufeinanderdrucken der Schichten vorgesehen sind und eine ebene Abstützfläche für das Trägersubstrat beim Druckvorgang vorgesehen ist.

Anhand der Zeichnung wird die Erfindung näher erläutert und zwar zeigt:
- Fig. 1: einen Querschnitt durch eine nach dem erfindungsgemäßen Verfahren hergestellte Farbstoffsolarzelle in schematischer Ansicht,
- Fig. 2: eine Druckmaschine in schematischer Darstellung zur Herstellung einer Farbstoffsolarzelle,
- Fig. 3: einen Querschnitt durch ein weiteres Ausführungsbeispiel einer nach dem erfindungsgemäßen Verfahren hergestellten Farbstoffsolarzelle
und
- Fig. 4: ein weiteres Ausführungsbeispiel einer erfindungsgemäß hergestellten Farbstoffsolarzelle.

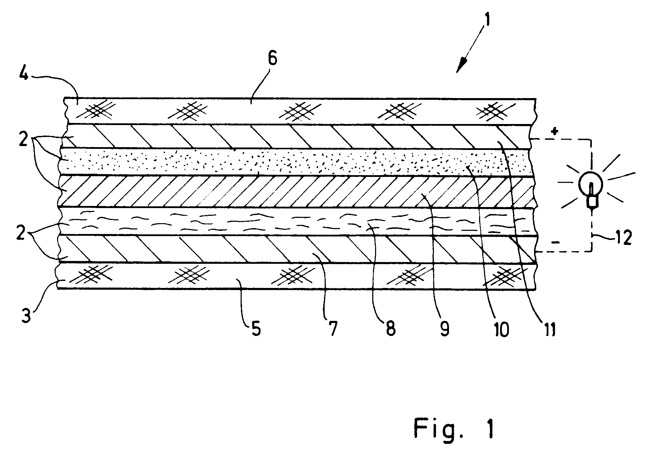

Gemäß Fig. 1 besteht der Aufbau einer Farbstoffsolarzelle 1 aus mehreren Schichten 2, die sich auf einem Trägersubstrat 3 befinden. Auf der dem Trägersubstrat 3 gegenüberliegenden Seite der Schichten 2 ist ein weiteres Trägersubstrat 4 angeordnet. Das Trägersubstrat 3 ist als Glasplatte 5 oder Kunststoffplatte ausgebildet. Es kann auch eine Kunststoffolie zum Einsatz kommen. Gleiches gilt für das Trägersubstrat 4, das als Glasplatte 6 oder entsprechendes Kunststoffelement (Platte oder Folie) ausgebildet ist. Die Glasplatten 5 und 6 lassen Licht in das Innere der Farbstoffsolarzelle 1 zur Erzeugung von elektrischem Strom eindringen.

Auf der Glasplatte 5 ist eine elektrisch leitfähige Schicht 7 aufgebracht, die üblicherweise als TCO-Schicht ausgebildet ist. Auf der elektrisch leitfähigen Schicht 7 befindet sich eine Titandioxid-Schicht 8 (TiO₂). Auf der Titandioxid-Schicht 8 ist eine Farbstoff-Schicht 9 angeordnet, der eine Elektrolyt-Schicht 10 folgt. Auf der Elektrolyt-Schicht 10 befindet sich wiederum eine elektrisch leitfähige Schicht 11, die ebenso wie die Schicht 7 ausgebildet ist. Die elektrisch leitfähigen Schichten 7 und 11 können entweder bei der Herstellung der Farbstoffsolarzelle 1 auf die Glasplatten 5 und 6 aufgebracht werden oder werden schon bei der Herstellung der Glasplatten 5 und 6 dort ausgebildet. Die beiden Schichten 7 und 11 dienen dazu, freie Elektronen zu sammeln, d. h., sie bilden Ladungskollektoren, um die Elektronen an einen äußeren Stromkreis abzugeben. Die Farbstoff-Schicht 9 ist äußerst dünn auf der Titandioxid-Schicht 8 aufgebracht, wobei die Titandioxid-Schicht 8 etwa eine Dicke von 10 µm aufweist. Der auf der Titandioxid-Schicht 8 aufgetragene Farbstoff absorbiert einfallendes Licht und gibt angeregte Elektronen an die Schicht 8 ab. Durch die Energieübertragung auf das Titandioxid entsteht im Farbstoff eine positive Aufladung. Die freien Elektronen gelangen über die elektrisch leitende Schicht 7 zum mit der Bezugsziffer 12 angedeuteten äußeren Stromkreis. Der Ladungsträgerausgleich findet über die Elektrolyt-Schicht 10 (zum Beispiel Jodid-Jod) statt, die über die elektrisch leitfähige Schicht 11 mit dem Stromkreis in Verbindung steht. Die Titandioxid-Schicht 8 besitzt aufgrund ihres Aufbaus eine effektive Oberfläche zur Aufnahme der Farbstoff-Schicht 9, die erheblich größer als die geometrische Oberfläche ist. Hierdurch wird der Wirkungsgrad der Farbstoffsolarzelle 1 erhöht.

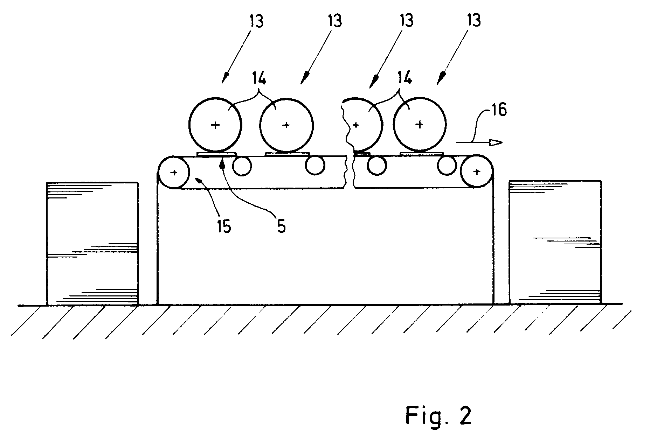

Erfindungsgemäß werden zumindest die Schichten 8, 9 und 10, gegebenenfalls auch die Schichten 7 und 11 mittels mehrerer hintereinander erfolgender Druckvorgänge aufgebracht. Hierzu ist - in schematischer Darstellung - der Fig. 2 eine Druckmaschine zu entnehmen, die mehrere Druckwerke 13 aufweist, von denen - der Einfachheit halber - lediglich Walzen 14 dargestellt sind, die das jeweils zur Schichtausbildung benötigte Medium übertragen. Glasplatten 5, die mit oder ohne TCO-Schicht (elektrisch leitfähige Schicht 7) ausgebildet sind, werden mittels einer Transporteinrichtung 15 in Richtung des Pfeiles 16 bewegt und passieren dabei nacheinander die verschiedenen Druckwerke 13. Die Transporteinrichtung 15, die beispielhaft in Fig. 2 als Trum ausgebildet ist, sorgt dafür, daß das Trägersubstrat, also die Glasplatte 5 und somit auch die im Zuge des Druckprozesses aufeinander aufgebauten Schichten nicht einer unzulässigen Biegung, Knickung, Verformung oder dergleichen unterliegt, so daß das jeweilige aufzubringende Medium vollflächig und zusammenhängend sowie riß- und beschädigungsfrei übertragen wird. Die Durchführung der Druckvorgänge und damit das Aufbringen der einzelnen Schichten 8, 9, 10 (beziehungsweise zusätzlich 7 und 11) erfolgt unmittelbar nacheinander beim Durchlaufen der verschiedenen Druckwerke, wobei unter "unmittelbar nacheinander" auch eine - nicht dargestellte - Lösung verstanden wird, bei der beispielsweise zwischen zwei Druckwerken eine thermische Aushärtvorrichtung oder dergleichen angeordnet sein kann.

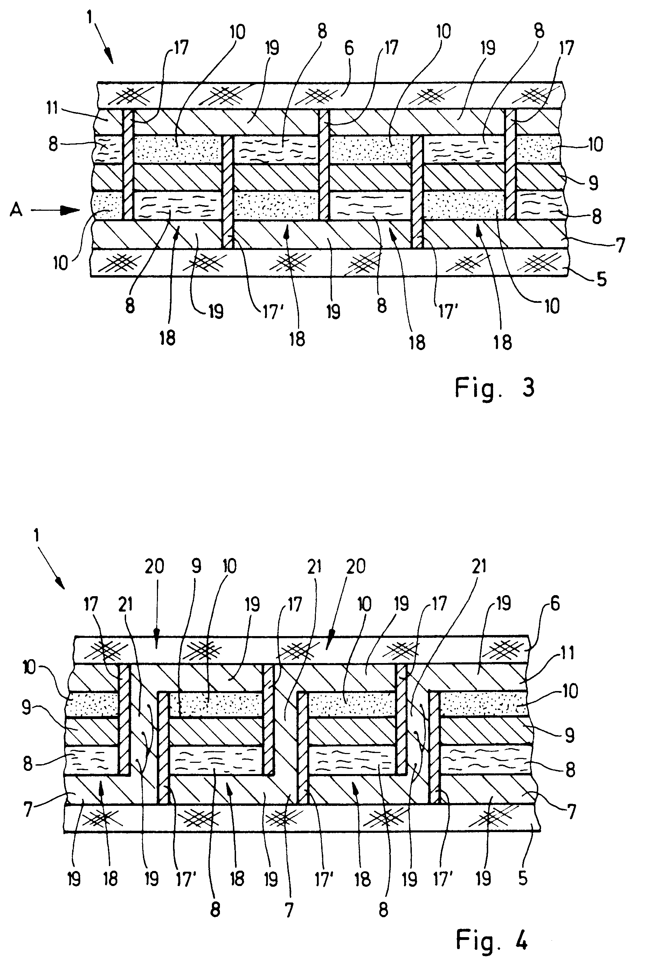

Die Schichtfolge des Gesamtsubstrats - wie es sich aus der Fig. 1 ergibt - kann gemäß Figur 3 bei der Herstellung mit Isolationsstegen 17, 17' zur Separation von Einzelzellen 18 versehen werden. Die Isolationsstege 17, 17' erstrecken sich quer, insbesondere senkrecht zu den Schichtebenen. Zwischen jeweils zwei Isolationsstegen 17 ist ein Isolationssteg 17' angeordnet, wobei die Schichtfolge im Bereich zwischen dem Isolationssteg 17 und dem angrenzenden Isolationssteg 17' verändert gegenüber der benachbarten Einzelzelle 18 im Bereich zwischen dem Isolationssteg 17' und dem dann folgenden Isolationssteg 17 ausgebildet ist. Diese Veränderung besteht darin, daß ein Vertauschen von der Titandioxid-Schicht 8 und der Elektrolyt-Schicht 10 vorliegt. Auf diese Art und Weise dreht sich die elektrische Polarität aneinandergrenzender Einzelzellen 18 um. Die Anordnung der Isolationsstege 17 beziehungsweise 17' ist nun derart getroffen, daß diese Stege Trennwände bilden, so daß die in einer Schichtebene liegende Titandioxid-Schicht 8 nicht in Berührung mit der in gleicher Schichtebene liegende, benachbarte Elektrolyt-Schicht 10 gelangt. Zur Bildung der Einzelzellen 18 werden jedoch auch die elektrisch leitfähigen Schichten 7 und 11 sowie die Farbstoff-Schicht 9 von den Isolationsstegen 17 beziehungsweise 17' unterteilt. Im Falle der Unterteilung der elektrisch leitfähigen Schichten 7 und 11 ist im Ausführungsbeispiel der Fig. 3 derart vorgegangen, daß der Isolationssteg 17 von der Glasplatte 6 ausgeht und sich bis zur elektrisch leitfähigen Schicht 7 erstreckt, diese jedoch nicht unterteilt. Der Isolationssteg 17' hingegen geht von der Glasplatte 5 aus und erstreckt sich bis zur elektrisch leitfähigen Schicht 11, ohne daß er diese unterteilt. Durch die auf diese Art und Weise erfolgende alternierende Aufteilung der verschiedenen Schichten werden Leitschichten 19 von den elektrisch leitfähigen Schichten 7 und 11 gebildet, wobei eine Leitschicht 19 jeweils den Plus- beziehungsweise Minus-Pol einer Einzelzelle 18 mit dem entsprechend entgegengesetzten Pol (also Minus- beziehungsweise Plus-Pol) einer benachbarten Einzelzelle 18 verbindet. Auf diese Art und Weise werden durch Reihenschaltung elektrische Module geschaffen.

Wesentlich ist, daß die Isolationsstege 17 beziehungsweise 17' ebenfalls im Zuge des Druckprozesses mit erzeugt werden. Die Druckmaschine ist derart ausgebildet, daß sie - beispielsweise bei der Erzeugung der Schichtebene A (Fig. 3) - von links nach rechts betrachtet, zunächst in dieser Ebene die Elektrolyt-Schicht 10 aufbringt und dann - in Druckrichtung betrachtet - ein Material zur Ausbildung des Isolationssteges 17 (d. h. eines Teiles davon) aufbringt. Es folgt dann der Auftrag der Titandioxid-Schicht 8, der dann wieder ein Abschnitt einer Schicht zur Ausbildung des Isolationssteges 17' folgt usw. Der Einfachheit halber sind die einzelnen Abschnitte, aus denen sich die Gesamtlänge der Isolationsstege 17 beziehungsweise 17' ergibt, nicht unterteilt dargestellt, da sie beim Aufeinanderdrucken eine in sich homogene Einheit bilden.

Bei dem Ausführungsbeispiel der Fig. 4 wird - ebenso wie zuvor beschrieben - der Auftrag der einzelnen Schichten mittels eines Druckprozesses mit einer Druckmaschine vorgenommen. Hierbei wird jedoch die Schichtfolge benachbarter Einzelzellen 18 stets gleich ausgebildet, so daß - für eine Reihenschaltung der Einzelzellen 18 - eine Umpol-Verschaltung 20 vorgenommen werden muß. Diese Umpol-Verschaltung 20 wird dadurch erzielt, daß die elektrisch leitfähige Schicht 7 eine Einzelzelle 18 mit der elektrisch leitfähigen Schicht 11 der benachbarten Einzelzelle 18 mittels eines Leitstegs 21 elektrisch verbunden wird. Der Leitsteg 21 verläuft jeweils zwischen zwei einen Leitstegaufnahmeraum zwischen sich ausbildenden Isolationsstegen 17 beziehungsweise 17'.

Am Ende des Druckvorgangs, wenn sämtliche Schichten aufgebracht sind, erfolgt ein Abschluß der Farbstoffsolarzelle 1 beziehungsweise des Gesamtsubstrats mittels der bereits vorstehend erwähnten Glasplatte 6.

## Patentansprüche

1. Verfahren zur Herstellung einer photochemischen Zelle, insbesondere Farbstoffsolarzelle (Dye Solar Cell), die mindestens ein Trägersubstrat und auf diesem mehrere Schichten aufweist,
**dadurch gekennziechnet**,
daß die Schichten (7, 8, 9, 10, 11 ; 8, 9, 10) mittels mehrerer, nacheinander erfolgender Druckvorgänge aufgebracht werden.

2. Verfahren nach Anspruch 1,
**dadurch gekennzeichnet,**
daß die Druckvorgänge unter Ausbildung jeweils einer vollflächigen, zusammenhängenden, nach Art eines Offsetdrucks erstellten Schicht (7, 8, 9, 10, 11; 8, 9, 10) durchgeführt werden.

3. Verfahren nach einem der vorhergehenden Ansprüche,
**dadurch gekennzeichnet,**
daß die Druckvorgänge unmittelbar nacheinander durchgeführt werden.

4. Verfahren nach einem der vorhergehenden Ansprüche,
**dadurch gekennzeichnet,**
daß jede Schicht (7, 8, 9, 10, 11; 8, 9, 10) mittels eines eigenen Druckwerks (13) einer Druckmaschine aufgebracht wird.

5. Verfahren nach einem der vorhergehenden Ansprüche,
**dadurch gekennzeichnet,**
daß zumindest einige der Schichten (7, 8, 9, 10, 11; 8, 9, 10) mittels Isolationsstegen (17, 17') in Abschnitte (Einzelzellen 18) separiert werden.

6. Verfahren nach einem der vorhergehenden Ansprüche,
**dadurch gekennzeichnet,**
daß die Isolationsstege (17, 17') durch Drucken hergestellt werden.

7. Verfahren nach einem der vorhergehenden Ansprüche,
**dadurch gekennzeichnet,**
daß zum Aufbau eines mehrere Schichten (7, 8, 9, 10, 11) überbrückenden Isolationsstegs (17, 17') mehrere Isolationssteg-Schichten aufgebracht werden.

8. Verfahren nach einem der vorhergehenden Ansprüche,
**dadurch gekennzeichnet**,
daß das Trägersubstrat (Glasplatte 5) beim Druckvorgang entlang einer Ebene geführt wird oder sich auf einer Ebene abstützt.

9. Verfahren nach einem der vorhergehenden Ansprüche,
**dadurch gekennzeichnet,**
daß die Schichten (7, 8, 9, 10, 11) als zähflüssiges Medium aufgedruckt werden.

10. Verfahren nach einem der vorhergehenden Ansprüche,
**dadurch gekennzeichnet,**
daß der elektrischen Stromleitung dienende Leitschichten (19) aufgedruckt werden.

11. Verfahren nach einem der vorhergehenden Ansprüche,
**dadurch gekennzeichnet,**
daß zwischen Isolationsstegen (17, 17') sich aus Leitschichten (19) zusammensetzende Leitstege (21) ausgebildet werden.

12. Photochemische Zelle, insbesondere Farbstoffzelle (Dye Solar Cell) die mindestens ein Trägersubstrat und auf diesem mehrere Schichten aufweist,
**dadurch gekennzeichnet,**
daß die Schichten (7, 8, 9, 10, 11; 8, 9, 10) mittels mehrerer, nacheinander durchgeführter Druckvorgänge aufeinanderliegend erzeugt sind.

13. Verfahren zur Verwendung einer Druckmaschine, insbesondere Offsetdruckmaschine, mit mehreren Druckwerken (13) zur Herstellung einer photochemischen Zelle, insbesondere Farbstoffsolarzelle (1) (Dye Solar Cell).

14. Druckmaschine, insbesondere Offsetdruckmaschine, zur Herstellung einer photochemischen Zelle, insbesondere Farbstoffsolarzelle (Dye Solar Cell), die mindestens ein Trägersubstrat und auf diesem mehrere Schichten aufweist,
**gekennzeichnet durch**
mehrere Druckwerke (13) zum Aufdrucken der Schichten (7, 8, 9, 10, 11; 8, 9, 10) und mit einer ebenen Abstützfläche für das Trägersubstrat (Glasplatte 5) beim Druckvorgang.
